(19) Europäisches Patentamt
European Patent Office
Office européen des brevets

(11) **EP 0 669 348 B1**

## (12) EUROPEAN PATENT SPECIFICATION

(45) Date of publication and mention
of the grant of the patent:
**10.06.1998 Bulletin 1998/24**

(51) Int Cl.[6]: **C08F 210/06**, C08J 5/18,
C08L 23/10, B32B 27/32

(21) Application number: **95301147.5**

(22) Date of filing: **22.02.1995**

(54) **Propylene random copolymer and film laminate thereof**

Statisches Propylencopolymer und Filmlaminat davon

Copolymère statistique de propylène et film laminé à partir de ce copolymère

(84) Designated Contracting States:
**DE FR GB IT**

(30) Priority: **25.02.1994 JP 28461/94**
**26.10.1994 JP 262357/94**

(43) Date of publication of application:
**30.08.1995 Bulletin 1995/35**

(73) Proprietor: **SUMITOMO CHEMICAL COMPANY LIMITED**
**Osaka-shi, Osaka 541 (JP)**

(72) Inventors:
• **Sadatoshi, Hajime**
**Ichihara-shi, Chiba (JP)**

• **Satoh, Makoto**
**Ichihara-shi, Chiba (JP)**
• **Naga, Naofumi**
**Ichihara-shi, Chiba (JP)**

(74) Representative: **Ablewhite, Alan James et al**
**MARKS & CLERK,**
**57/60 Lincoln's Inn Fields**
**London WC2A 3LS (GB)**

(56) References cited:
EP-A- 0 126 640          EP-A- 0 146 968
EP-A- 0 395 055          EP-A- 0 426 139
EP-A- 0 468 333          EP-A- 0 577 407
GB-A- 2 105 651

**Description**

BACKGROUND OF THE INVENTION

Field of the Invention

The present invention relates to a propylene random copolymer and a film laminate thereof. More specifically, the invention pertains to a propylene random copolymer having favorable blocking resistance and low-temperature heat-sealing properties as well as a film laminate prepared from such a propylene random copolymer. The propylene random copolymer of the invention, which has excellent blocking resistance and transparency and substantially maintains favorable low-temperature heat-sealing properties after the corona discharge treatment, is typically applied to a heat sealant.

Description of the Related Art

Polypropylene has excellent physical properties and are accordingly applied to various fields. Propylene random copolymers typically applied to wrapping films are prepared by random copolymerization of propylene and ethylene and/or $\alpha$-olefin for enhancing heat-sealing properties at low temperatures. These random copolymers are generally produced with conventional Ziegler-Natta Catalysts. The random copolymers have sufficient transparency and heat-sealing properties attributable to their low crystallinity and low melting point. The content of 20°C xylene soluble fraction (CXS) in the random copolymer, which has an undesirable property for food wrapping, extremely increases with the content of ethylene and/or $\alpha$-olefin.

The heat sealant layer on the surface of the wrapping film is typically treated with corona discharge for improving the printing properties. The corona discharge treatment, however, leads to decomposition of the propylene random copolymer in the heat sealant layer, thereby deteriorating the low-temperature heat-sealing properties of the wrapping film.

A method disclosed in JP-A-1-266116 gives a propylene random copolymer having the less content of 20°C xylene soluble fraction (CXS) by random copolymerization of propylene and ethylene and/or $\alpha$-olefin in the presence of a catalytic system comprising a group IVB transition-metal compound having one or more cyclopentadienyl groups and an aluminoxane. Although the random copolymer prepared by this method has a sufficiently low melting point, it still has a large CXS content and insufficient blocking resistance. The catalyst residue of aluminoxane is difficult to remove and undesirably affects the optical properties of the resulting random copolymer.

A syndiotactic propylene-1-butene random copolymer containing 0.01 to 20 % by weight of propylene is disclosed in JP-A-4-175317. This copolymer has the high content of 1-butene, which gives favorable low-temperature heat-sealing properties but insufficient blocking resistance.

A syndiotactic propylene-ethylene random copolymer containing 4.6 % by weight of ethylene and having favorable low-temperature heat-sealing properties and optical properties is disclosed in JP-A-5-245992. Propylene-ethylene random copolymers generally have a large content of 20°C xylene soluble fraction (CXS) and insufficient blocking resistance, thus not being suitable for a sealant.

Various publications illustrate the use of polypropylene copolymers prepared using catalysts of the type generally known as Ziegler-Natta catalysts, including EP-A-0126640, EP-A0577407, GB-A-2105651 and EP-A-0146968, to provide products with improved transparency and reduced blocking. However, no propylene random copolymers adequately fulfilling the contradictory requirements, that is, the high blocking resistance and favorable low-temperature heat-sealing properties, have been proposed yet.

DETAILED DESCRIPTION OF THE INVENTION

One object of the invention is thus to provide a propylene random copolymer having excellent blocking resistance and transparency and substantially maintaining favorable low-temperature heat-sealing properties to a corona discharge treatment for improvement in printing properties.

Another object of the invention is to provide a film laminate prepared from such a propylene random copolymer.

As a result of intensive studies, the inventors have found that these objects are realized by a propylene random copolymer having a composition and an intrinsic viscosity [$\eta$] in specific ranges, and fulfilling a specific relationship between a melting point (Tm) and a content of 20°C xylene soluble fraction (CXS).

The invention is directed to a propylene random copolymer comprising a propylene component and an $\alpha$-olefin component having 4 to 10 carbon atoms, wherein

(A) the content of the $\alpha$-olefin component is in a range of 6 to 40 % by weight,

(B) the intrinsic viscosity [η] measured in tetralin at 135°C is not lower than 0.45 dl/g and not higher than 5.0 dl/g,

(C) the melting point (Tm) measured by a differential scanning calorimeter and a content of 20°C xylene soluble fraction (CXS) fulfil a relationship of

$$Tm \leq 140 - 35.693 \times \log_{10}(CXS),$$

(D) the signal arising from a structure having two or more methylene units $-(CH_2)-$ in a molecular chain of said propylene random copolymer is detectable by $^{13}C$-NMR spectroscopy, and

(E) said random copolymer is obtainable via a catalytic system comprising essential catalytic components of:

(1) a group IVB transition metal compound having one or more cyclopentadienyl groups,

(2) a compound reacting with said transition metal compound to form a stable anion, and

(3) an organoaluminum compound.

The invention is also directed to a film laminate prepared by laminating such a propylene random copolymer upon a base layer.

According to one aspect of the invention, the propylene random copolymer is obtainable via a catalytic system. The catalytic system includes essential catalytic components:

(1) a group IVB transition metal compound having one or more cyclopentadienyl groups;

(2) a compound reacting with the transition-metal compound to form a stable anion; and

(3) an organoaluminum compound.

The propylene random copolymer of the invention is prepared by copolymerizing propylene and an α-olefin. The α-olefin used herein contains 4 to 10 carbon atoms, more specifically 4 to 6 carbon atoms. A preferable example of α-olefin is 1-butene. One α-olefin or a mixture of two or more α-olefins may be used as the α-olefin component of the invention. The content of the α-olefin component in the propylene random copolymer is in a range of 6 to 40 % by weight, preferably in a range of 7 to 35 % by weight, and more preferably in a range of 15 to 30 % by weight. The α-olefin component of less than 6 % by weight results in a excessively high melting point, which deteriorates the low-temperature heat-sealing properties. The α-olefin component of greater than 40 % by weight, on the other hand, increases the 20°C xylene soluble fraction, thereby deteriorating the blocking resistance.

The intrinsic viscosity [η] of the propylene random copolymer of the invention measured in tetralin at 135°C is not lower than 0.45 dl/g and not higher than 5.0 dl/g or more specifically not lower than 0.45 dl/g and not higher than 3.0 dl/g. The intrinsic viscosity [η] of lower than 0.45 dl/g causes loss of clarity in preparation of a film and extremely worsens the transparency. The intrinsic viscosity [η] of higher than 5.0 dl/g, on the other hand, deteriorates the processing properties.

In the propylene random copolymer of the invention, a melting point (Tm) measured by a differential scanning calorimeter and a content of 20°C xylene soluble fraction (CXS) fulfill a relationship of $Tm \leq 140 - 35.693 \times \log_{10}(CXS)$ or more preferably a relationship of $Tm \leq 137 - 35.693 \times \log_{10}(CXS)$. The propylene random copolymer which does not fulfill such relationship does not satisfy both of the contradictory properties, that is, low-temperature heat-sealing properties and blocking resistance.

It is essential that the propylene random copolymer of the invention has the content of α-olefin component and the intrinsic viscosity [η] in the ranges specified above and fulfills the specific relationship between the melting point (Tm) and the content of 20°C xylene soluble fraction (CXS). Deviation from the specific ranges or relationship does not give a propylene random copolymer having excellent blocking resistance and substantially maintaining favorable low-temperature heat-sealing properties through the corona discharge treatment.

A small quantity of ethylene may be copolymerized in the propylene random copolymer of the invention as long as the ethylene does not damage the physical properties of the resulting copolymer.

A signal derived from a structure having two or more methylene units $-(CH_2)-$ in a molecular chain of the propylene random copolymer is detected by $^{13}C$-NMR spectroscopy. This shows the presence of head-to-head linkage and tail-to-tail linkage in copolymerization of propylene and α-olefin. A sample solution prepared by dissolving approximately 150 mg of the copolymer in 3 ml of o-dichlorobenzene in a sample tube (10 mmφ) was measured by $^{13}C$-NMR spectroscopy under the following conditions: temperature of measurement = 135°C; frequency of measurement = 67.8 MHz; spectral width = 3,000 Hz; filter width = 10,000 Hz; pulse interval = 10 seconds; pulse width = 45 degrees; number of accumulations = 5,000 -7,000 times).

Spectra thus obtained were analyzed according to a method proposed by Kazuo Soga, Takeshi Shiono, and Walter Kaminsky (Makromol. Chem., Rapid Commun., 8, 305(1987)) or a method proposed by Alfonso Grassi, Adolfo Zambelli, Luigi Resconi, Enrico Albizzati, and Romano Mazzocchi (Macromolecules, 21, 617(1988)).

The propylene random copolymer of the invention may be prepared by a catalytic system proposed by J.C.W. Chien et al. (Applied Organometal Chem., 7, 71(1993)) or J.A. Ewen ('Catalyst Design for Tailor-made Polyolefins', K. Soga and M.Terano, Eds.; Elsevier, Amsterdam, Oxford, New York, Tokyo, 1994, p405). The catalytic system applied to preparation of the propylene random copolymer includes:

(1) a group IVB transition metal compound having one or more cyclopentadienyl groups;
(2) a compound reacting with the transition-metal compound to form a stable anion; and
(3) an organoaluminum compound.

The catalytic component (1), that is, the group IVB transition metal compound having one or more cyclopentadienyl groups, applied to preparation of the propylene random copolymer of the invention preferably contains a cycloalkadienyl group or its substituent. The catalytic component (1) is a zirconium or hafnium compound having a multidentate ligand prepared by linking at least two groups selected from the group consisting of an indenyl group, a substituted indenyl group, and a partial hydride of the substituted indenyl group bridged with each other via a lower alkylene group.

Preferable examples of the transition-metal compound (1) are stereorigid chiral compounds of zirconium and hafnium, such as ethylenebis(indenyl)zirconium dichloride specified by H.H. Brintzinger et al., J. Organometal. Chem., 288, 63(1985), ethylenebis(indenyl)hafnium dichloride specified in J. Am. Chem. Soc., 109, 6544(1987), dimethylsilylbis(methylcyclopentadienyl)zirconium dichloride specified by H. Yamazaki et al., Chemistry letters, 1853(1989), and dimethylsilylenebis(1-indenyl)zirconium dichloride specified by W.Spaleck et al., Angew. Chem. Int. Ed. Engl., 31, 1347 (1992).

Concrete examples include ethylenebis(1-indenyl)zirconium dichloride, ethylenebis(4,5,6,7-tetrahydro-1-indenyl) zirconium dichloride, ethylenebis(4-methyl-1-indenyl)zirconium dichloride, ethylenebis(5-methyl-1-indenyl)zirconium dichloride, ethylenebis(6-methyl-1-indenyl)zirconium dichloride, ethylenebis(7-methyl-1-indenyl)zirconium dichloride, ethylenebis(2,3-dimethyl-1-indenyl)zirconium dichloride, ethylenebis(4,7-dimethyl-1-indenyl)zirconium dichloride, dimethylsilylbis(methylcyclopentadienyl)zirconium dichloride, dimethylsilylbis(t-butylcyclopentadienyl)zirconium dichloride, dimethylsilylbis(dimethylcyclopentadienyl)zirconium dichloride, dimethylsilylbis(trimethylcyclopentadienyl) zirconium dichloride, dimethylsilyl(methylcyclopentadienyl) (dimethylcyclopentadienyl)zirconium dichloride, dimethylsilyl(methylcyclopentadienyl) (t-butylcyclopentadienyl) zirconium dichloride, dimethylsilylbis(1-indenyl)zirconium dichloride, dimethylsilylbis(4,5,6,7-tetrahydro-1-indenyl)zirconium dichloride, dimethylsilylbis(4-methyl-1-indenyl)zirconium dichloride, dimethylsilylbis(5-methyl-1-indenyl)zirconium dichloride, dimethylsilylbis(6-methyl-1-indenyl)zirconium dichloride, dimethylsilylbis(7-methyl-1-indenyl)zirconium dichloride, dimethylsilylbis(2,3-dimethyl-1-indenyl)zirconium dichloride, dimethylsilylbis(4,7-dimethyl-1-indenyl)zirconium dichloride, ethylenebis(1-indenyl)hafnium dichloride, ethylenebis(4,5,6,7-tetrahydro-1-indenyl)hafnium dichloride, ethylenebis(4-methyl-1-indenyl)hafnium dichloride, ethylenebis(5-methyl-1-indenyl)hafnium dichloride, ethylenebis(6-methyl-1-indenyl)hafnium dichloride, ethylenebis(7-methyl-1-indenyl)hafnium dichloride, ethylenebis(2,3-dimethyl-1-indenyl)hafnium dichloride, ethylenebis(4,7-dimethyl-1-indenyl)hafnium dichloride, dimethylsilylbis(methylcyclopentadienyl)hafnium dichloride, dimethylsilylbis(t-butylcyclopentadienyl)hafnium dichloride, dimethylsilylbis(dimethylcyclopentadienyl)hafnium dichloride, dimethylsilylbis(trimethylcyclopentadienyl)hafnium dichloride, dimethylsilyl(methylcyclopentadienyl)(dimethylcyclopentadienyl)hafnium dichloride, dimethylsilyl(methylcyclopentadienyl)(t-butylcyclopentadienyl) hafnium dichloride, dimethylsilylbis(1-indenyl)hafnium dichloride, dimethylsilylbis(4,5,6,7-tetrahydro-1-indenyl)hafnium dichloride, dimethylsilylbis(4-methyl-1-indenyl)hafnium dichloride, dimethylsilylbis(5-methyl-1-indenyl)hafnium dichloride, dimethylsilylbis(6-methyl-1-indenyl) hafnium dichloride, dimethylsilylbis(7-methyl-1-indenyl)hafnium dichloride, dimethylsilylbis(2,3-dimethyl-1-indenyl)hafnium dichloride, and dimethylsilylbis(4,7-dimethyl-1-indenyl)hafni um dichloride.

Preferable examples of the compound (2) reacting with the transition-metal compound to form a stable anion are tetrakis(pentafluorophenyl) borates and tetrakis(pentafluorophenyl) aluminates, such as trityltetrakis(pentafluorophenyl) borate, N,N-dimethylaniliniumtetrakis(pentafluorophenyl) borate, and trityltetrakis(pentafluorophenyl) aluminate.

The organoaluminum compound (3) has at least one Al-C bond in the molecular structure. Concrete examples of the organoaluminum compound (3) include: trialkylaluminums, such as triethylaluminum, triisobutylaluminum, and trihexylaluminum; dialkylaluminum halides, such as diethylaluminum halide and diisobutylaluminum halide; mixtures of trialkylaluminum and dialkylaluminum halide; alkylalmoxane, such as tetraethyldialmoxane and tetrabutyldialmoxane.

Trialkylaluminums, mixtures of trialkylaluminum and dialkylaminum halide, and alkylalmoxane are preferable for the organoaluminum compound (3). Especially preferable are triethylalminum, triisobutylaluminum, mixture of triethylaluminum and diethylaluminum chloride, and tetraethyldialmoxane.

Triethylaluminum and triisobutylaluminum are specifically preferable for the organoaluminum compound (3).

The allowable content of the organoaluminum compound (3) ranges from 1 to 1,000 moles with respect to one mole of transition metal atoms included in the transition-metal compound (1) whereas the preferable range is 5 to 600 moles.

The respective catalytic constituents (1) through (3) are supplied to a reactor in an atmosphere of nitrogen, argon, or another inert gas in the presence of monomers under no-humid conditions. The catalytic constituents (1) through (3) may be supplied separately, or two of the constituents may be previously brought into contact with each other.

The allowable temperature of polymerization ranges from -30°C to 300°C while the preferable range is 0 to 280°C or more specifically 20 to 250°C.

Although the pressure of polymerization is not specifically limited, a range from the ordinary pressure to 150 atmospheric pressure is preferable from the industrial and economical points of view. The polymerization time depends upon the type of target polymer and a reaction system, but generally ranges from 5 minutes to 40 hours.

Polymerization may be carried out continuously or by batch. Other possible processes include slurry or solvent polymerization using an inactive hydrocarbon solvent, like propane, butane, pentane, hexane, heptane, or octane, and liquid-phase or gas-phase polymerization without any solvent.

A chain transfer agent such as hydrogen may be added to regulate the molecular weight of the copolymer prepared in the invention.

The copolymer of the invention is not restricted by the catalysts or processes of preparation mentioned above.

Appropriate antioxidants, neutralizers, lubricants, anti-blocking agents, and anti-static agents may be added to the random copolymer of the invention according to the requirements, as long as these additives do not damage the effects of the invention.

The propylene random copolymer of the invention is laid over a base layer to form a film laminate, which has excellent blocking resistance and transparency and substantially maintains favorable low-temperature heat-sealing properties through the corona discharge treatment.

The film laminate of the invention is prepared by laminating a layer of the propylene random copolymer on one face or both faces of a base film or sheet. A crystalline α-olefin polymer, especially, crystalline polypropylene, is preferable for the base material. The crystalline polypropylene contains at least 80% by weight of boiling heptane insoluble fraction, and has the intrinsic viscosity [η] of 1.3 to 4.2 dl/g and the propylene component of not less than 95 % in the polymer. The crystalline polypropylene may be a copolymer containing ethylene, 1-butene, or 1-hexene at the concentration of not greater than 5 %.

The film laminate of the invention is prepared: by laying a sheet of the propylene random copolymer upon a base layer via an adhesive and making the laminate pass through a pair of pressure rollers; by applying the propylene random copolymer dissolved or dispersed in toluene or another solvent onto the base layer; by extruding a melt of the propylene random copolymer to coat the base layer with the copolymer; by extruding a melt of the propylene random copolymer and a molten base polymer separately into a common die and joining the molten copolymer and base polymer with each other inside or at a port of the die.

It is preferable to stretch the film laminate of the invention uniaxially or biaxially after laminating the propylene random copolymer. An oriented film laminate is manufactured according to any one of the known processes. A first possible process includes the steps of: preparing a sheet laminate by mixing a melt of the propylene random copolymer with a molten base polymer inside or at a port of a die for extrusion molding; and stretching the sheet laminate biaxially. A second possible process includes the steps of: extruding a laminate of the propylene random copolymer onto a base sheet to prepare a sheet laminate; and stretching the sheet laminate biaxially. A third possible process includes the steps of: stretching a hot base sheet uniaxially in the MD direction with a series of rolls including metal rolls; extruding a laminate of the propylene random copolymer onto the uniaxially oriented base; and stretching the whole sheet laminate in the TD direction.

The film laminate thus manufactured has excellent low-temperature heat-sealing properties as well as sufficient transparency, blocking resistance, and scratch resistance, thus being favorably applied to various fields.

As described previously, the invention provides a propylene random copolymer having excellent blocking resistance and transparency and substantially maintaining favorable low-temperature heat-sealing properties through the corona discharge treatment. The invention also provides a film laminate prepared from such a propylene random copolymer. The propylene random copolymer is favorably applicable to a heat sealant while the film laminate is suitable for wrapping films. The film laminate obtained by the process of the invention has a small CXS content and is thus suitable for food-wrapping films.

BRIEF DESCRIPTION OF THE DRAWING

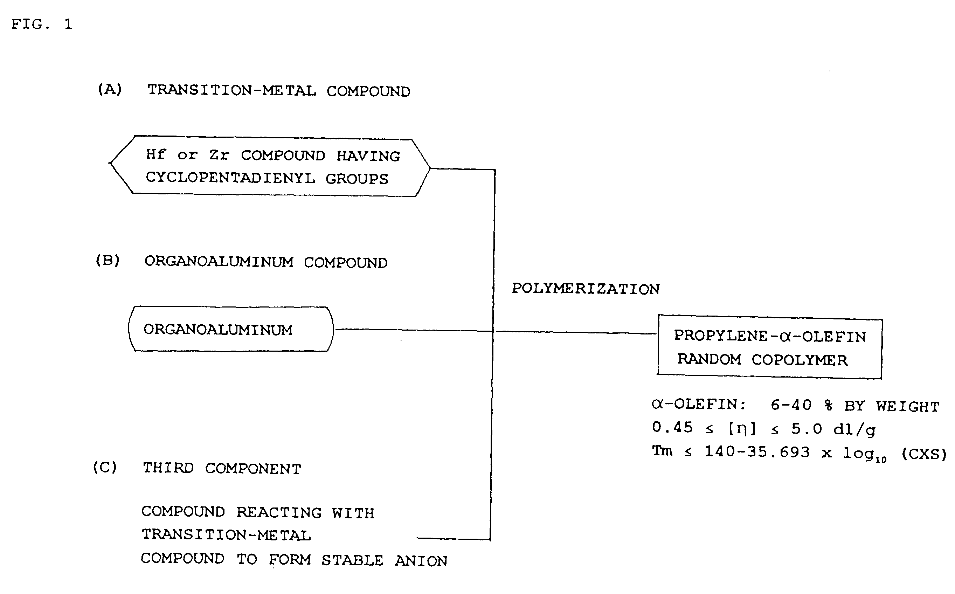

Fig. 1 is a flow chart showing a typical example according to the invention.

EXAMPLES

The objects and features of the invention will become more apparent through the detailed description of examples according to the invention. The examples below are only illustrative and not restrictive in any sense.

Various measurements of properties and processes were executed in the following manner.

(1) Content of 1-butene : % by weight

The content of 1-butene was measured by $^{13}$C nuclear magnetic resonance spectroscopy.

(2) Melting point (Tm) : °C

A differential scanning calorimeter (DSC by the Perkin-Elmer Corporation) was used for the measurement. A sample (10mg) was molten at 220°C in an atmosphere of nitrogen for five minutes and then cooled at a rate of 5°C/minute to the temperature of 50°C for crystallization. The sample was then heated at a rate of 10° C/minute, and the temperature at a maximum peak of the endothermic curve obtained was designated as a melting point.

(3) Heat-sealing temperature : °C

Sealant surfaces of films were superposed upon each other and set in a heat sealant. A sealed film of 25 mm wide was prepared by applying a load of 2 kg/cm$^2$ for 2 seconds in the heat sealant and left overnight. The temperature of the heat sealer to give a peeling resistance of 300g/25mm under conditions of a peel rate of 200 mm/minute at 23°C and a peeling angle of 180 degrees was specified as a heat-sealing temperature.

(4) Content of 20°C xylene soluble fraction (CXS) : % by weight

A sample (5 g) was completely dissolved in 500 ml of boiled xylene, cooled to the temperature of 20°C, and left at least four hours. After a precipitate was filtered out, the filtrate was evaporated and dried under reduced pressure at 70°C. The weight of the dried filtrate was then measured by % by weight.

(5) Blocking resistance : kg/12cm$^2$

Two film sheets were superposed upon each other by applying a load of 500 g/12cm$^2$ at the temperature of 60°C for 3 hours. A sample piece cut to a size of 3cmx10cm was fixed to a jig to have a contact surface of 3cmx4cm. The blocking resistance was measured as a load required for completely peeling the film off when the test sample was moved at a rate of traveled load of 20 g/minute.

(6) Corona discharge treatment

A laminator (by Tanabe Plastics Co., Ltd.) and a radio-frequency power source (by Kasuga Electric Co., Ltd.) were used for corona discharge treatment. The conditions were a line rate of 30 m/minute and a corona discharge pressure of 160V.

(7) Transparency (total haze) : %

The transparency of a film cut to a size of approximately 50mmx50mm was measured according to JIS K6741.

(8) Existence of two or more methylene units

The existence of two or more methylene units was measured with an NMR spectrometer (Model EX-270 by JEOL Ltd.) according to a method described previously.

The following were used for the catalytic component (1), that is, a group IVB transition metal compound having one or more cyclopentadienyl groups, and the catalytic compound (2), that is, a compound reacting with the transition-metal compound to form a stable anion.

(1) Transition-metal compound

Ethylenebis (indenyl) zirconium dichloride: commercially available from Witco Co., Ltd.
Ethylenebis(indenyl)hafnium dichloride: commercially available from Nippon Fine Chemical Co., Ltd

(2) Compound reacting with a transition-metal compound to form a stable anion

Trityltetrakis(pentafluorophenyl) borate: commercially available from TOSOH AKZO Corporation.

Example 1

Polymerization

The atomosphere in a 1-liter stainless steel autoclave equipped with stirrer was substituted by nitrogen gas. Twenty-eight grams of liquefied 1-butene and 252 grams of liquefied propylene were introduced into the autoclave, and the autoclave was cooled to a polymerization temperature of 0°C.

The atomosphere in a 100 ml flask with a magnetic stirrer was also substituted by nitrogen gas. In an atmosphere of nitrogen, 10 ml of toluene purified with activated alumina, 3.5 mmol triethylaluminum, and 5.6 μmol ethylenebis (indenyl)zirconium dichloride were mixed with stirring for five minutes at the ambient temperature. The mixture was then introduced into the 1 liter autoclave above. After 5.6 μmol trityltetrakis(pentafluorophenyl) borate dissolved in 5 ml of toluene was further introduced into the autoclave, the autoclave was kept at 0°C for 0.7 hours for polymerization. The polymerization was stopped by stirring another 30 minutes after injection of 10 ml of isobutyl alcohol. Non-reacted monomers were purged from the product of polymerization, and the contents of the autoclave were placed in approximately 2 liters of ethanol. Polymers precipitated were dried at 60°C for 4 hours to yield 39 grams of a propylene-1-butene copolymer. The content of 1-butene in the copolymer was determined to be 7.2 % by weight by $^{13}$C-nuclear magnetic resonance spectroscopy. The melting point was measured to be 137°C with the differential scanning calorimeter. The intrinsic viscosity $[\eta]$ measured in tetralin at 135°C was equal to 0.60 dl/g.

Preparation of Film and Evaluation of Physical Properties

After 0.2 parts by weight of Sumilizer BHT (a phenolic antioxidizer, mfd. by Sumitomo Chemical Co., Ltd.), 0.05 parts by weight of Irganox 1010 (a phenolic antioxidizer, mfd. by Ciba-Geigy Ltd.), and 0.1 parts by weight of calcium stearate were added to 100 parts by weight of the copolymer thus obtained, the mixture was blended with a small-sized roll kneader for 10 minutes and cut into pellets. A 90mmx90mm sheet laminate, which consists of a polypropylene layer of 500μm thick (polypropylene: FS2011D manufactured by SUMITOMO CHEMICAL CO., LTD.; MFR = 2.2 to 2.8 g/10 minutes; density = 0.902 g/cm$^3$, and ethylene content = 0.3 to 0.5 % by weight; CXS = 3.5 % by weight, Tm = 158°C) and a sealant layer of 100μm thick prepared from the copolymer was pre-heated at 150°C for 3 minutes and stretched at a rate of 5 m/minute and a draw ratio of (XxY)=5x5 times with a portable biaxial stretching machine (by Toyo Seiki Seisaku-sho Ltd.) to a film of 22μm thick. The heat-sealing temperature of the film was 121°C both before and after the corona discharge treatment. Substantially no blocking resistance was observed as the blocking resistance value of 0 kg/12cm$^2$, and the total haze was equal to 1.4 %. The results of evaluation are shown in Table 1.

Example 2

Except that 56 grams of liquefied 1-butene and 224 grams of liquefied propylene were used for polymerization and that the polymerization time was 1.5 hours, the procedures of Example 1 were repeated to yield 23 grams of a propylene-1-butene copolymer. The content of 1-butene in the copolymer obtained was measured to be 18.9 % by weight. The melting point and the intrinsic viscosity $[\eta]$ were respectively equal to 119°C and 0.57 dl/g. The heat-sealing temperature of a film including a sealant layer prepared from the copolymer was 101°C prior to the corona discharge treatment and 104°C after the corona discharge treatment. The blocking resistance was observed as 0.27 kg/12cm$^2$ and the total haze was equal to 1.3 %. The results of evaluation are shown in Table 1.

Example 3

Except that 84 grams of liquefied 1-butene and 196 grams of liquefied propylene were used for polymerization and that the polymerization time was 1.5 hours, the procedures of Example 1 were repeated to yield 31 grams of a propylene-1-butene copolymer. The content of 1-butene in the copolymer obtained was measured to be 25.2 % by weight. The melting point and the intrinsic viscosity $[\eta]$ were respectively equal to 108°C and 0.55 dl/g. The heat-sealing temperature of a film including a sealant layer prepared from the copolymer was 89°C prior to the corona discharge treatment and 91°C after the corona discharge treatment. The blocking resistance was observed as 0.50 kg/12cm$^2$ and the total haze was equal to 0.9 %. The results of evaluation are shown in Table 1.

Example 4

Except that 4.9 µmol ethylenebis(indenyl)zirconium dichloride and 4.9 µmol trityltetrakis(pentafluorophenyl) borate were used for polymerization and that the polymerization was continued at 25°C for 1.3 hours, the procedures of Example 1 were repeated to yield 132 grams of a propylene-1-butene copolymer. The content of 1-butene in the copolymer obtained was measured to be 7.8 % by weight. The melting point and the intrinsic viscosity [η] were respectively equal to 132°C and 0.46 dl/g. The heat-sealing temperature of a film including a sealant layer prepared from the copolymer was 120°C prior to the corona discharge treatment and 117°C after the corona discharge treatment. The blocking resistance was observed as 0.35 kg/12cm$^2$ and the total haze was equal to 0.9 %. The results of evaluation are shown in Table 1.

Example 5

Polymerization

The atmosphere in a 3-liter stainless steel autoclave equipped with a stirrer was substituted by nitrogen gas. After 1.0 liter of toluene purified with activated alumina, 52 grams of liquefied 1-butene, and 105 grams of propylene gas were introduced into the autoclave, the autoclave was heated to a polymerization temperature of 50°C.

The atmosphere in a 100 ml flask with a magnetic stirrer was also substituted by nitrogen gas. In an atmosphere of nitrogen, 10 ml of toluene purified with activated alumina, 4.3 mmol triisobutylaluminum, and 8.5 µmol ethylenebis (indenyl)hafnium dichloride were mixed with stirring for five minutes at the ambient temperature. The mixture was then introduced with propylene gas into the 3 liter autoclave above. After 8.5 µmol trityltetrakis(pentafluorophenyl) borate dissolved in 4 ml of toluene was further introduced with propylene gas into the autoclave, polymerization was executed with a continuous supply of propylene gas at a pressure of approximately 6.0 kg/cm$^2$ and the temperature of 50°C for 1.5 hours. The polymerization was stopped by stirring another 30 minutes after injection of 10 ml of isobutyl alcohol. Non-reacted monomers were purged from the product of polymerization, and the contents of the autoclave were placed in approximately 5 liters of ethanol. Polymers precipitated were dried at 60°C for four hours to yield 65 grams of a propylene-1-butene copolymer. The content of 1-butene in the copolymer was determined to be 14.1 % by weight by $^{13}$C-nuclear magnetic resonance spectroscopy. The melting point was measured to be 112°C with the differential scanning calorimeter. The intrinsic viscosity [η] measured in tetralin at 135°C was equal to 2.26 dl/g.

Preparation of Film and Evaluation of Physical Properties

The preparation of a film and evaluation of physical properties of the film were executed in the same manner as Example 1. The heat-sealing temperature of the film having a sealant layer prepared from the copolymer was 95°C prior to the corona discharge treatment and 90°C after the corona discharge treatment. The blocking resistance was observed as 1.05 kg/12cm$^2$ and the total haze was equal to 1.7 %. The results of evaluation are shown in Table 1.

Reference 1

Except that 56 grams of liquefied 1-butene, 224 grams of liquefied propylene, 4.9 µmol ethylenebis (indenyl)zirconium dichloride, and 4.9 µmol trityltetrakis(pentafluorophenyl) borate were used for polymerization and that the polymerization was continued at 25°C for 1 hour, the procedures of Example 1 were repeated to yield 96 grams of a propylene-1-butene copolymer. The content of 1-butene in the copolymer obtained was measured to be 17.7 % by weight. The melting point and the intrinsic viscosity [η] were respectively equal to 116°C and 0.39 dl/g. The heat-sealing temperature of a film including a sealant layer prepared from the copolymer was 105°C both before and after the corona discharge treatment. The film lost its clarity in the process of preparation, and the blocking resistance was accordingly 0 kg/12cm$^2$. The total haze was equal to 9.1 %. The results of evaluation are shown in Table 1.

Reference 2

Except that 84 grams of liquefied 1-butene, 196 grams of liquefied propylene, 4.9 µmol ethylenebis(indenyl) zirconium dichloride, and 4.9 µmol trityltetrakis(pentafluorophenyl) borate were used for polymerization and that the polymerization was continued at 25°C for 1.5 hours, the procedures of Example 1 were repeated to yield 51 grams of a propylene-1-butene copolymer. The content of 1-butene in the copolymer obtained was measured to be 24.7 % by weight. The melting point and the intrinsic viscosity [η] were respectively equal to 104°C and 0.42 dl/g. The heat-sealing temperature of a film including a sealant layer prepared from the copolymer was 92°C before the corona discharge treatment and 101°C after the corona discharge treatment. The film lost its clarity in the process of preparation, and the blocking resistance was accordingly 0 kg/12cm$^2$. The total haze was equal to 15.7 %. The results of evaluation are shown in Table 1.

Reference 3

Except that 140 grams of liquefied 1-butene, 140 grams of liquefied propylene, 4.9 μmol ethylenebis(indenyl) zirconium dichloride, and 4.9 μmol trityltetrakis(pentafluorophenyl) borate were used for polymerization and that the polymerization was continued at 25°C for 1.5 hours, the procedures of Example 1 were repeated to yield 25 grams of a propylene-1-butene copolymer. The content of 1-butene in the copolymer obtained was measured to be 43.1 % by weight. The melting point and the intrinsic viscosity [η] were respectively equal to 78°C and 0.41 dl/g. The heat-sealing temperature of a film including a sealant layer prepared from the copolymer was 55°C both before and after the corona discharge treatment. The blocking resistance was greater than 2 kg/12cm$^2$ and thus unmeasurable. The total haze was equal to 1.6 %. The results of evaluation are shown in Table 1.

Reference 4

A sealant layer was prepared from SUMITOMO NOBLENE 180G (propylene-1-butene copolymer manufactured by SUMITOMO CHEMICAL CO., LTD.; content of 1-butene = 22.9 % by weight; melting point = 138°C; intrinsic viscosity [η] = 1.86 dl/g). A film prepared in the same manner as Example 1 had the heat-sealing temperature of 90°C before the corona discharge treatment and of 111°C after the corona discharge treatment. The blocking resistance was greater than 2 kg/12cm$^2$ and thus unmeasurable. The total haze was equal to 0.4 %. The results of evaluation are shown in Table 1.

Reference 5

The atmosphere in a 3-liter stainless steel autoclave equipped with a stirrer was substituted by nitrogen gas, and 1.0 liter of n-hexane purified with activated alumina, 4.4 mmol triethylaluminum, and 0.33 mmol cyclohexylethyl-dimethoxysilane were introduced into the autoclave with application of a hydrogen pressure of 100 mmHg. Ninety-four grams of liquefied propylene and 100 grams of liquefied 1-butene were further introduced into the autoclave, which was heated to a polymerization temperature of 50°C. Hexane slurry of a solid catalyst (27 mg) prepared according to the method specified as Example 2(A) and 2(B) in JP-A-1-319508 was further introduced with propylene gas into the autoclave. Polymerization was executed with a continuous supply of propylene gas at a pressure of approximately 4.0 kg/cm$^2$ and the temperature of 50°C for two hours. Non-reacted monomers were purged from the product of polymerization and ash was removed by addition of 3.0 ml of propylene oxide. The contents of the autoclave were placed in ethanol of an approximately four-fold volume. Polymers precipitated were dried at 60°C under reduced pressure for 4 hours to yield 161 grams of a propylene-1-butene copolymer. The content of 1-butene in the copolymer obtained was measured to be 21.0 % by weight. The melting point and the intrinsic viscosity [η] were respectively equal to 131°C and 2.03 dl/g. The heat-sealing temperature of a film including a sealant layer prepared from the copolymer was 105°C prior to the corona discharge treatment and 114°C after the corona discharge treatment. The blocking resistance was observed as 1.59 kg/12cm$^2$ and the total haze was equal to 1.3 %. The results of evaluation are shown in Table 1.

Reference 6

Polymerization

The atmosphere in a 1-liter stainless steel autoclave equipped with a stirrer was substituted by nitrogen gas. Eighty-four grams of liquefied 1-butene and 196 grams of liquefied propylene were introduced into the autoclave, and the autoclave was cooled to a polymerization temperature of 0°C.

The atmosphere in a 100 ml flask with a magnetic stirrer was also substituted by nitrogen gas. In an atmosphere of nitrogen, 10 ml of toluene purified with activated alumina, 1.75 mmol (as the concentration of aluminum atoms) polymethylalmoxane (modified methylalmoxane commercially available by Tosoh-Akzo), and 5.6 μmol ethylenebis(indenyl)zirconium dichloride were mixed with stirring for five minutes at the ambient temperature. The mixture was then introduced into the 1 liter autoclave, and the autoclave was kept at 0°C for one hour for polymerization. The polymerization was stopped by stirring another 30 minutes after injection of 10 ml of isobutyl alcohol. Non-reacted monomers were purged from the product of polymerization, and the contents of the autoclave were placed in approximately 2 liters of ethanol. Polymers precipitated were dried at 60°C for 4 hours to yield 84 grams of a propylene-1-butene copolymer. The content of 1-butene in the copolymer obtained was measured to be 29.6 % by weight. The melting point and the intrinsic viscosity [η] were respectively equal to 97.5°C and 0.50 dl/g.

Preparation of Film and Evaluation of Physical Properties

The preparation of a film and evaluation of physical properties of the film were executed in the same manner as Example 1. The heat-sealing temperature of the film having a sealant layer prepared from the copolymer was 75°C prior to the corona discharge treatment and 77°C after the corona discharge treatment. The blocking resistance was observed as 1.13 kg/12cm$^2$ and the total haze was equal to 3.1 %. The results of evaluation are shown in Table 1.

Reference 7

Except that 56 grams of liquefied 1-butene and 224 grams of liquefied propylene were used for polymerization and that the polymerization temperature was 25°C, the procedures of Reference 6 were repeated to yield 193 grams of a propylene-1-butene copolymer. The content of 1-butene in the copolymer obtained was measured to be 22.6 % by weight. The melting point and the intrinsic viscosity [η] were respectively equal to 110°C and 0.41 dl/g. The heat-sealing temperature of a film including a sealant layer prepared from the copolymer was 99°C before the corona discharge treatment and 104°C after the corona discharge treatment. The film lost its clarity in the process of preparation, and the blocking resistance was accordingly 0 kg/12cm$^2$. The total haze was equal to 10.6 %. The results of evaluation are shown in Table 1.

Reference 8

Polymerization

The atomosphere in a 3-liter stainless steel autoclave equipped with a stirrer was substituted by nitrogen gas. After 1.0 liter of toluene purified with activated alumina, 27 grams of liquefied 1-butene, and 108 grams of propylene gas were introduced into the autoclave, the autoclave was heated to a polymerization temperature of 50°C.

The atomosphere in a 100 ml flask with a magnetic stirrer was also substituted by nitrogen gas. In an atmosphere of nitrogen, 10 ml of toluene purified with activated alumina, 10.9 mmol (as the concentration of aluminum atoms) polymethylalminoxane (modified methylalminoxane commercially available by Tosoh-Akzo), and 4.4 μmol ethylenebis (indenyl)hafnium dichloride were mixed with stirring for five minutes at the ambient temperature. The mixture was then introduced with propylene gas into the 3 liter autoclave. Polymerization was executed with a continuous supply of propylene gas at a pressure of approximately 6.0 kg/cm$^2$ and the temperature of 50°C for one hour. The polymerization was stopped by stirring another 30 minutes after injection of 10 ml of isobutyl alcohol. Non-reacted monomers were purged from the product of polymerization, and the contents of the autoclave were placed in approximately 5 liters of ethanol. Polymers precipitated were dried at 60°C for 4 hours to yield 41 grams of a propylene-1-butene copolymer. The content of 1-butene in the copolymer was determined to be 13.3 % by weight by $^{13}$C-nuclear magnetic resonance spectroscopy. The melting point was measured to be 109°C with the differential scanning calorimeter. The intrinsic viscosity [η] measured in tetralin at 135°C was equal to 2.35 dl/g.

Preparation of Film and Evaluation of Physical Properties

The preparation of a film and evaluation of physical properties of the film were executed in the same manner as Example 1. The heat-sealing temperature of the film including a sealant layer prepared from the copolymer was 93°C prior to the corona discharge treatment and 91°C after the corona discharge treatment. The blocking resistance was observed as 0.65 kg/12cm$^2$ and the total haze was equal to 4.9 %. The results of evaluation are shown in Table 1.

TABLE 1

| | Content of 1-butene (% by weight) | Melting point (°C) | CXS % | (Melting point) Calcd.=140 -35.693 x $\log_{10}$CXS | [η] dℓ/g | Two or more Methylene units | Heat-sealing temperature (°C) | | Blocking kg/12 cm² | Transparency of oriented film: Total haze (%) |
|---|---|---|---|---|---|---|---|---|---|---|
| | | | | | | | Before corona discarge treatment | After corona discharge treatment | | |
| Example 1 | 7.2 | 137 | 0.9 | 141 | 0.60 | Exist | 121 | 121 | 0 | 1.4 |
| Example 2 | 18.9 | 119 | 1.0 | 140 | 0.57 | Exist | 101 | 104 | 0.27 | 1.3 |
| Example 3 | 25.2 | 108 | 2.1 | 129 | 0.55 | Exist | 89 | 91 | 0.50 | 0.9 |
| Example 4 | 7.8 | 132 | 1.3 | 136 | 0.46 | Exist | 120 | 117 | 0.35 | 0.9 |
| Example 5 | 14.1 | 112 | 0.2 | 164 | 2.26 | Exist | 95 | 90 | 1.05 | 1.7 |
| Reference 1 | 17.7 | 116 | 3.3 | 121 | 0.39 | Exist | 105 | 105 | 0 | 9.1 |
| Reference 2 | 24.7 | 104 | 9.7 | 105 | 0.42 | Exist | 92 | 101 | 0 | 15.7 |
| Reference 3 | 43.1 | 78 | 99 | 68.8 | 0.41 | Exist | 55 | 55 | 2.0< | 1.6 |
| Reference 4 | 22.9 | 138 | 15 | 98.0 | 1.86 | Not exist | 90 | 111 | 2.0< | 0.4 |
| Reference 5 | 21.0 | 131 | 7.2 | 109 | 2.03 | Not exist | 105 | 114 | 1.59 | 1.3 |
| Reference 6 | 29.6 | 98 | 38 | 83.7 | 0.50 | Exist | 75 | 77 | 1.13 | 3.1 |
| Reference 7 | 22.6 | 110 | 16 | 97.1 | 0.41 | Exist | 99 | 104 | 0 | 10.6 |
| Reference 8 | 13.3 | 109 | 0.3 | 159 | 2.35 | Exist | 93 | 91 | 0.65 | 4.9 |

## Claims

1. A propylene random copolymer comprising a propylene component and an $\alpha$-olefin component having 4 to 10 carbon atoms, wherein

   (A) the content of said $\alpha$-olefin component is in a range of 6 to 40 % by weight,
   (B) the intrinsic viscosity [$\eta$] measured in tetralin at 135°C is not lower than 0.45 dl/g and not higher than 5.0 dl/g,
   (C) the melting point (Tm) measured by a differential scanning calorimeter and the content of 20°C xylene soluble fraction (CXS) fulfil a relationship of

   $$Tm \leq 140\text{-}35.693 \times \log_{10}(CXS),$$

   (D) the signal arising from a structure having two or more methylene units -(CH$_2$)- in a molecular chain of said propylene random copolymer is detectable by $^{13}$C-NMR spectroscopy, and
   (E) said random copolymer is obtainable via a catalytic system comprising essential catalytic components of:

      (1) a group IVB transition metal compound having one or more cyclopentadienyl groups,
      (2) a compound reacting with said transition metal compound to form a stable anion, and
      (3) an organoaluminum compound.

2. The propylene random copolymer according to Claim 1, wherein the content of said $\alpha$-olefin component is in a range of 7 to 35 % by weight.

3. The propylene random copolymer according to Claim 1 or Claim 2, wherein said $\alpha$-olefin is 1-butene.

4. The propylene random copolymer according to any of claims 1 to 3, wherein said catalytic components (1), (2), and (3) respectively comprise:

      (1) a zirconium or hafnium compound having a chiral cyclopentadienyl ring;
      (2) a compound containing tetrakis(pentafluorophenyl) borate; and
      (3) triethylaluminum or tri (isobutyl) aluminum.

5. A film laminate obtainable by laminating a propylene random copolymer according to any of Claims 1 to 4 upon a base layer.

6. The film laminate according to Claim 5, wherein said base layer comprises crystalline polypropylene.

## Patentansprüche

1. Statistisches Propylencopolymer, umfassend einen Propylenbestandteil und einen $\alpha$-Olefinbestandteil mit 4 bis 10 Kohlenstoffatomen, in dem

   (A) der Gehalt des $\alpha$-Olefinbestandteils im Bereich von 6 bis 40 Gew.-% liegt,
   (B) die Grenzviskosität [$\eta$], gemessen in Tetralin bei 135°C nicht geringer als 0.45 dl/g und nicht größer als 5.0 dl/g ist,
   (C) der Schmelzpunkt (Tm), gemessen mit einem Differentialscanningkalorimeter und der Gehalt des in Xylol bei 20°C löslichen Teils (CXS) eine Beziehung

   $$Tm \leq 140\text{-}35.693 \times \log_{10}(CXS)$$

   erfüllen,
   (D) das von einer Struktur mit zwei oder mehr Methyleneinheiten -(CH$_2$)- in einer Molekülkette des statistischen Propylencopolymers stammende Signal durch $^{13}$C-NMR-Spektroskopie nachweisbar ist, und
   (E) das statistische Copolymer über ein katalytisches System erhältlich ist, das als wesentliche Katalysatorbestandteile umfaßt:

(1) eine Übergangsmetallverbindung der Gruppe IVB mit einer oder mehreren Cyclopentadienylgruppen,
(2) eine Verbindung, die mit der Übergangsmetallverbindung reagiert, wobei sie ein stabiles Anion bildet, und
(3) eine Organoaluminiumverbindung.

2. Statistisches Propylencopolymer nach Anspruch 1, in dem der Gehalt des α-Olefinbestandteils im Bereich von 7 bis 35 Gew.-% liegt.

3. Statistisches Propylencopolymer nach Anspruch 1 oder 2, in dem das α-Olefin 1Buten ist.

4. Statistisches Propylencopolymer nach einem der Ansprüche 1 bis 3, in dem die Katalysatorbestandteile (1), (2) bzw. (3) umfassen:

(1) eine Zirkonium- oder Hafniumverbindung mit einem chiralen Cyclopentadienylring;
(2) eine Tetrakis(pentafluorphenyl)borat enthaltende Verbindung; und
(3) Triethylaluminium oder Tri(isobutyl)aluminium.

5. Folienlaminat. erhältlich durch Laminieren eines statistischen Propylencopolymers nach einem der Ansprüche 1 bis 4 auf eine Grundschicht.

6. Folienlaminat nach Anspruch 5, in dem die Grundschicht kristallines Polypropylen umfaßt.

**Revendications**

1. Copolymère statistique de propylène comprenant un composant propylène et un composant α-oléfine ayant 4 à 10 atomes de carbone, dans lequel

(A) la teneur en ledit composant α-oléfine est dans un domaine de 6 à 40 % en masse,
(B) la viscosité intrinsèque [η] mesurée dans la tétraline à 135°C, n'est pas inférieure à 0,45 dl/g et pas supérieure à 5,0 dl/g.
(C) le point de fusion (Tf) mesuré au moyen d'un calorimètre différentiel à balayage et la teneur en fraction soluble dans le xylène 20°C (TSX) se conforment à une relation

$$Tf \leq 140 - 35{,}693 \times \log_{10} (TSX),$$

(D) le signal dû à une structure ayant deux ou plusieurs unités méthylène -$(CH_2)$- dans une chaîne moléculaire dudit copolymère statistique de propylène est détectable par spectroscopie RMN $^{13}$C, et
(E) ledit copolymère statistique peut être obtenu par l'intermédiaire d'un système catalytique comprenant des composants catalytiques essentiels de :

(1) un composé d'un métal de transition du groupe IVB ayant un ou plusieurs groupes cyclopentadiényle,
(2) un composé réagissant avec ledit composé de métal de transition pour former un anion stable, et,
(3) un composé d'organoaluminium

2. Copolymère statistique de propylène selon la revendication 1 dans lequel la teneur dudit composant α-oléfine est dans un domaine de 7 à 35 % en masse.

3. Copolymère statistique de propylène selon la revendication 1 ou la revendication 2 dans lequel ladite α-oléfine est le but-1-ène.

4. Copolymére statistique de propylène selon l'une quelconque des revendications 1 à 3 dans lequel lesdits composants catalytiques (1), (2) et (3) comprennent respectivement :

(1) un composé de zirconium ou de hafnium ayant un cycle cyclopentadiényle chiral ;
(2) un composé contenant du borate de tétrakis(pentafluorophényle); et
(3) du triéthylaluminium ou du tri(isobutyl)aluminium.

**5.** Stratifié de films qui peut être obtenu par stratification d'un copolymère statistique de propylène selon l'une quelconque des revendications 1 à 4 sur une couche de base.

**6.** Stratifié de films selon la revendication 5 dans lequel ladite couche de base comprend du polypropylène cristallin.

FIG. 1

(A)   TRANSITION-METAL COMPOUND

> Hf or Zr COMPOUND HAVING CYCLOPENTADIENYL GROUPS

(B)   ORGANOALUMINUM COMPOUND

> ORGANOALUMINUM

POLYMERIZATION

(C)   THIRD COMPONENT

COMPOUND REACTING WITH
TRANSITION-METAL
COMPOUND TO FORM STABLE ANION

PROPYLENE-$\alpha$-OLEFIN RANDOM COPOLYMER

$\alpha$-OLEFIN:   6-40 % BY WEIGHT
$0.45 \leq [\eta] \leq 5.0$ dl/g
Tm $\leq 140-35.693 \times \log_{10}$ (CXS)

EP 0 669 348 B1